# EUROPEAN PATENT SPECIFICATION

(11) **EP 2 860 531 B1**
(45) Date of publication and mention of the grant of the patent: **22.06.2016**
(21) Application number: 14187828.0
(22) Date of filing: 06.10.2014
(51) Int. Cl.: G01P 13/02, B64F 1/18

(54) **Wind detection apparatus**
Winddetektionsvorrichtung
Appareil de détection de vent

(30) Priority: 08.10.2013 IT PD20130278
(43) Date of publication of application: 15.04.2015
(73) Proprietor: Combustion and Energy S.r.l., 23848 Oggiono - Lecco (LC) (IT)
(72) Inventor: Di Giovine, Vincenzo, 1-23900 Lecco (LC) (IT)
(74) Representative: Gallo, Luca

(56) References cited:
- EP-A1- 2 327 991
- WO-A2-2008/050240

## Description

### Field of application

The present invention refers to a wind detection apparatus, according to the preamble of the independent claim.

The present wind detection apparatus is intended to be advantageously employed for indicating the direction and intensity of the wind in particular at airports, heliports, railway bridges, road overpasses, bridges, industrial factories such as chemical plants etc.

In particular, the present apparatus is provided with at least one illuminating device actuatable for illuminating the apparatus itself in conditions of poor visibility, such as for example at night, in the presence of fog etc.

### State of the art

Wind detection apparatuses are known on the market which conventionally comprise a support pole fixed to the ground and a signaling body with tubular form (in jargon of the field termed windsock) rotatably constrained to the upper end of the support pole and generally colored with alternating white and red bands.

More in detail, the signaling body is made of flexible material (such as fabric) and is extended with a substantially frustoconical form between a wider first end edge thereof, constrained to the support pole, and a narrower and free end edge thereof. In addition, the signaling body is provided with an internal channel communicating with the outside by means of a wider first opening delimited by the first end edge and an opposite narrower second opening delimited by the second end edge.

In particular, the first end edge of the signaling body is fixed to a support ring, which is in turn fixed to a rotatable arm mounted in an idle manner to the support pole.

In operation, the wind is susceptible of entering into the internal channel of the signaling body through the wider first opening of the latter and, since the narrower second opening allows less air to exit than that which enters from the first opening, the wind inflates the signaling body, which consequently rotates the rotatable arm until it is arranged longitudinally aligned with the direction of the wind.

Wind detection apparatuses have for some time been known on the market that are provided with one or more light sources adapted to illuminate the signaling body in conditions of poor visibility, such as at night, in the presence of fog etc.

For example, apparatuses are known which comprise an illuminating device fixed rigidly on the upper end of the support pole above the signaling body, and provided with four arms projecting orthogonally with respect to each other, each of which bearing, fixed to the free end thereof, a downward-directed projector.

During the night, the four projectors are all turned on in a manner such to illuminate the entire zone around the support pole, so as to illuminate the signaling body whatever direction it assumes when inflated by the wind.

A first drawback of this wind detection apparatus of known type is due to the fact that it requires turning on all projectors simultaneously in order to illuminate the signaling body in the different possible positions that it can assume, with a consequent high energy consumption.

A further drawback is due to the fact that, when the signaling body is arranged in intermediate position between two projecting arms of the illuminating device, most of the light emitted by the projectors does not hit the signaling body, which therefore is not illuminated in an optimal manner and thus results poorly visible.

In order to at least partly resolve the aforesaid drawbacks, a wind detection apparatus has for some time been on the market, described for example in the patent US 1,913,672, which is provided with a lamp fixed on the upper end of the support pole, and a reflection body fixed on the rotatable arm (to which the signaling body is fixed) and arranged in position diametrically opposite the signaling body with respect to the position of the lamp. In operation, upon variation of the direction assumed by the signaling body inflated by the wind, the reflector rotates integrally with the rotatable arm (and hence with the signaling body) around the lamp, in a manner such to reflect part of the light emitted by the latter towards the signaling body in order to illuminate it. One drawback of the apparatus of known type described in the patent US 1,913,672 is due to the fact that only a small part of the light emitted by the lamp is reflected towards the signaling body, with a consequent waste of light that involves low energy efficiency. Also known from the patent EP 2327991 is a wind detection apparatus comprising a signaling body fixed by means of a bracket to the support pole, and a projector integrally fixed to the support pole and arranged opposite the end edge of the signaling body fixed to the pole.

The lower end of the support pole is fixed to a rotatable base in order to allow the rotation of the apparatus according to the direction of the wind.

The projector is connected to a power supply cable connected to the rotatable base, which is electrically connected by means of a sliding contact to a fixed base which is in turn connected to a source of electrical energy.

A first drawback of the apparatus of known type described in the patent EP 2327991 lies in the fact that it is structurally complex given the arrangement of the support pole on a rotatable base to allow the rotation of the apparatus itself.

A further drawback of the apparatus described in the patent EP 2327991 is due to the fact that wind with not particularly strong intensity is not capable of making the entire pole rotate with the rotatable base and the projector, since the latter overall have high weight, and consequently the apparatus is unable to indicate the direction of weak or moderately-intense winds.

A further drawback is due to the fact that the sliding contact between the rotatable base and the fixed base of the apparatus is subject to be worn over time due to friction, as well as dirtied after the deposit of dust, earth etc., which causes the interruption of the electrical contact between the fixed base and the rotatable base, thus preventing the power supply of the projector.

### Presentation of the invention

In this situation, the essential object of the present invention is therefore to remedy the drawbacks shown by the solutions of known type, by providing a wind detection apparatus that is entirely reliable and efficient in operation.

A further object of the present invention is to provide a wind detection apparatus that is structurally simple and inexpensive to produce.

A further object of the present invention is to provide a wind detection apparatus that is reliable over time and that in particular does not require frequent maintenance or repair.

### Brief description of the drawings

The technical characteristics of the invention, according to the aforesaid objects, can be clearly found in the contents of the below-reported claims and the advantages thereof are more evident in the following detailed description, made with reference to the enclosed drawings, which represent several merely exemplifying and non-limiting embodiments of the invention, in which:
- figure 1 shows a side perspective view of the wind detection apparatus, subject of the present invention;
- figure 2 shows a side view of a detail of the apparatus illustrated in figure 1, relative to the rotatable frame and the illuminating device;
- figure 3 shows a first perspective view of the detail of the present apparatus illustrated in figure 2;
- figure 4 shows a different second perspective view of the detail of the present apparatus illustrated in figure 2, with some parts removed in order to better illustrate others;
- figure 5 shows a detail of the wind detection apparatus, subject of the present invention, relative to the illuminating device;
- figure 6 shows a section view of the wind detection apparatus illustrated in figure 2 along line I - I of the same figure 2, in accordance with a first embodiment of the present invention, with the transformer illustrated in a schematic manner;
- figure 7 shows a section view of the wind detection apparatus illustrated in figure 2 along line I - I of the same figure 2, in accordance with a second embodiment of the present invention, with the transformer illustrated in a schematic manner;
- figure 8 illustrates a simplified scheme relative to the functional connection between the illuminating device and the control means of the apparatus that is the subject of the present invention.

### Detailed description of a preferred embodiment

With reference to the set of drawings, reference number 1 indicates overall the wind detection apparatus that is the subject of the present invention.

The present wind detection apparatus 1 comprises a support structure 2 provided with at least one support rod 3 provided with a substantially vertical extension axis, and a rotatable frame 4 pivoted in an idle manner to the support rod 3 so as to be able to rotate around the latter.

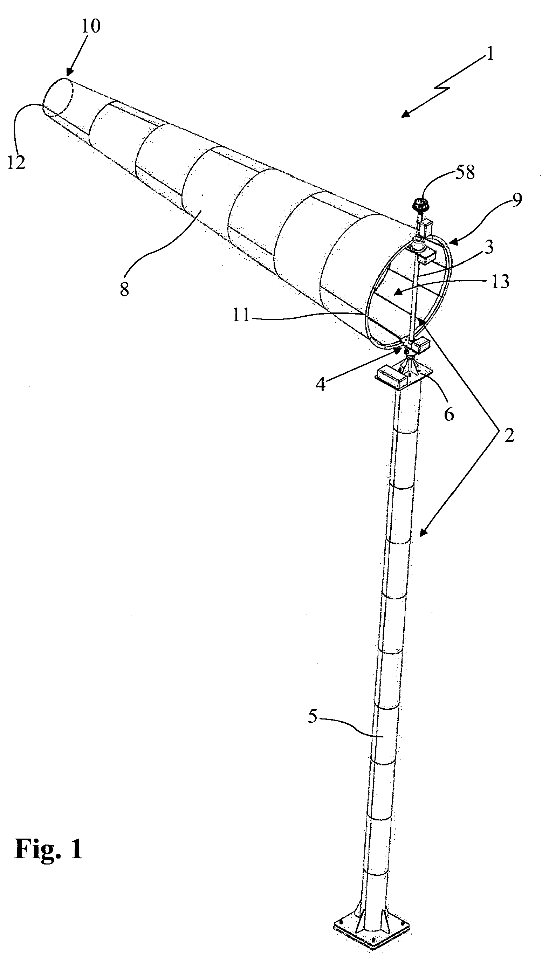

More in detail, in accordance with the embodiment illustrated in figure 1, the support structure 2 preferably comprises a support pole 5, substantially vertical, intended to be fixed to the ground, and bearing, fixed on the top thereof, the aforesaid support rod 3. In particular, the support pole 5 is provided, on the top thereof, with a base plate 6, substantially horizontal, on which the support rod 3 is mounted, which is preferably provided with a support foot 7 fixed on the base plate 6 itself.

The present apparatus 1 also comprises a signaling body 8 made of flexible material and with substantially tubular form, fixed to the rotatable frame 4 and intended to be inflated by the wind in order to indicate the direction and intensity of the latter.

More in detail, the signaling body 8 is longitudinally extended, with preferably frustoconical form, between a first end 9 thereof and a second end 10 thereof, at which the signaling body 8 is respectively provided with a first edge 11 fixed to the rotatable frame 4, and with a second edge 12 preferably with width less than that of the first 11. The signaling body 8 is advantageously provided with an internal channel 13 extended between the first end 9 and the second end 10 of the signaling body 8 itself, and connected with the outside by means of a wider first opening, delimited by the first edge 11, and a narrower second opening, delimited by the second edge 12.

The wind is susceptible of entering inside the signaling body 8 through the (wider) first opening of the latter, acting on the signaling body 8 in order to rotate the rotatable frame 4 around the support rod 3 until signaling body 8 itself is aligned with the direction of the wind.

More in detail, advantageously, the wind is susceptible of entering into the internal channel 13 of the signaling body 8 through the first opening of the latter and, since the narrower second opening allows less air to exit from the signaling body 8 than that which enters from the wider first opening, the wind inflates the signaling body 8, which consequently rotates the rotatable frame 4 until it is arranged longitudinally aligned with the direction of the wind.

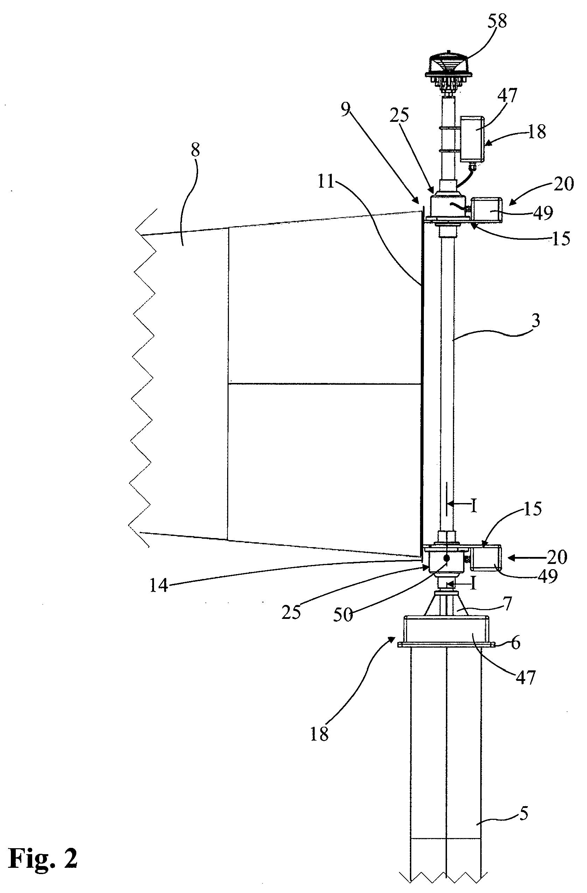

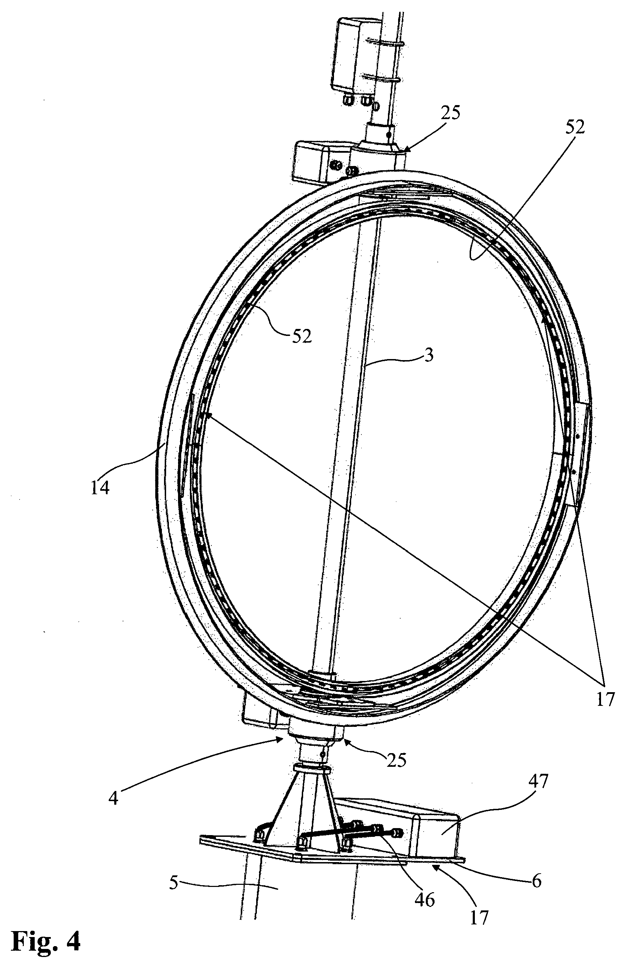

Advantageously, in accordance with the embodiment illustrated in figures 2 - 4, the rotatable frame 4 is provided with a support ring 14, preferably made of metal, to which the first edge 11 of the signaling body 8 is fixed in order to maintain the first opening of the latter completely open to facilitate the entrance of the wind into the internal channel 13 of the signaling body 8 itself.

More in detail, the rotatable frame 4 is provided with two engagement bodies 15 preferably plate-like, rotatably constrained to the support rod 3, and provided with respective first projecting portions 16' thereof extended projecting from the support rod 3 towards the signaling body 8 and bearing the support ring 14 fixed at diametrically opposite portions of the latter.

The wind detection apparatus 1 comprises at least one illuminating device 17 fixed to the rotatable frame 4 and actuatable for illuminating the signaling body 8, in particular in conditions of poor visibility, such as at night, in the presence of fog etc.

In addition, the apparatus 1 comprises power supply means 18 mechanically associated with the support structure 2 and adapted to supply a first alternating current for allowing the actuation of the illuminating device 17.

According to the idea underlying the present invention, the apparatus 1 comprises at least one transformer 19 mounted on the support rod 3 and electrically connected in input to the power supply means 18 in order to receive the aforesaid first alternating current, and adapted to supply in output a second alternating current, advantageously proportional to the first.

In addition, the apparatus 1 comprises control means 20 mounted on the rotatable frame 4, power supplied by the transformer 19 by means of the aforesaid second alternating current, and electrically connected to the illuminating device 17 in order to supply an electrical control quantity thereto by means of which it controls the operation of the illuminating device 17 itself.

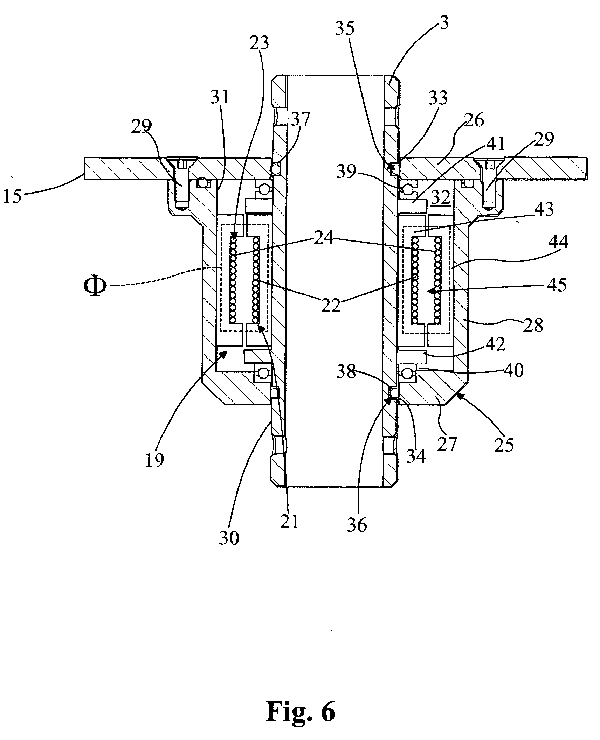

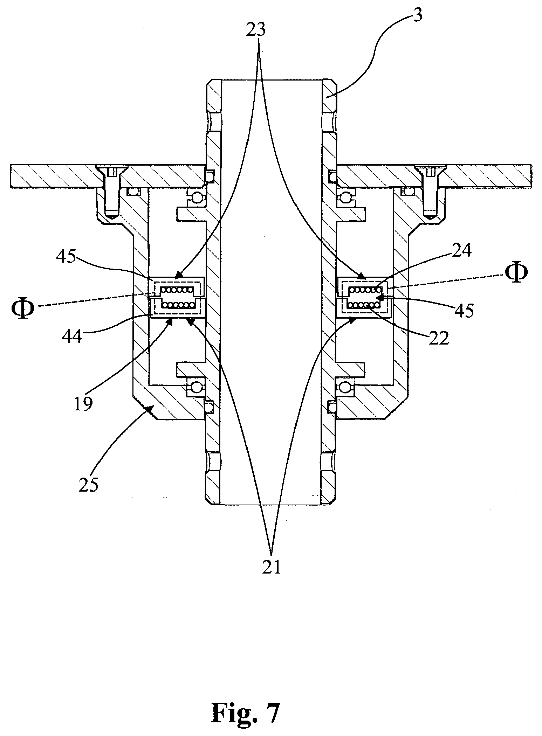

More in detail, with reference to the embodiments illustrated in figures 6 and 7 (in which the transformer 19 is illustrated in a schematic manner), the transformer 19 comprises a primary winding 21, which is fixed to the support rod 3, is provided with first turns 22 wound around the support rod 3 itself and connected to the power supply means 18 in order to receive the first alternating current adapted to generate a magnetic field Φ (schematically illustrated with dashed lines in figures 6 and 7) linked with the first turns 22 themselves.

In addition, the transformer 19 comprises a secondary winding 23, which is fixed to the rotatable frame 4, is arranged spaced from the primary winding 21, and is provided with second turns 24 positioned around the support rod 3 and electrically connected to the control means 20 of the illuminating device 17.

The magnetic field Φ, generated by the first alternating current that flows in the first turns 22 of the primary winding 21, is susceptible of being linked with the second turns 24 and of generating, via magnetic induction, the second alternating current that passes into the second turns 24 themselves and which is provided to the control means 20.

In this manner, the transformer 19 of the apparatus 1, according to the present invention, advantageously allows transferring the electric power supply in a reliable manner between the power supply means 18, integral with the fixed support structure 2 of the apparatus 1, and the control means 20 of the illuminating device 17, integral with the rotatable frame 4 which is susceptible of rotating around the support rod 3 following the action of the wind on the signaling body 8 (as described above). In particular, the primary winding 21 (fixed to the fixed support structure 2) and the secondary winding 23 (susceptible of rotating with the rotatable body 4) do not have any part in contact, and therefore are not subject to any problem of reliability due to wear, as instead occurs in solutions of known type equipped with sliding contacts.

Advantageously, the rotatable frame 4 of the apparatus 1 comprises a protection body 25 extended around the support rod 3 and arranged to contain the transformer 19 in order to protect the latter from weathering agents such as rain, moisture etc.

Preferably, the protection body 25 is extended along the axis of the support rod 3 between a first base wall 26, preferably obtained with a portion of the engagement body 15 of the rotatable frame 4, and a second base wall 27 connected to the first 26 by means of a side wall 28 extended around the support rod 3.

In accordance with the embodiments illustrated in the enclosed figures, the first base wall 26 of the protection body 25 is fixed to the side wall 28 by means of fixing screws 29, inserted in particular in corresponding engagement holes obtained on the first base wall and screwed with their shank in corresponding threaded holes obtained on the thickness of the side wall 28.

Preferably, the second base wall 27 of the protection body 25 is obtained in a single body with the side wall 28.

Advantageously, the support rod 3 of the present apparatus 1 is provided with an external surface 30 to which the primary winding 21 of the transformer 19 is fixed, and the protection body 25 is provided with an internal surface 31 to which the secondary winding 23 of the transformer 19 itself is fixed.

Preferably, the secondary winding 23 of the transformer 19 is fixed to the internal face of the side wall 28 of the protection body 25.

Advantageously, the internal surface 31 of the protection body 25 delimits, with the portion of the external surface 30 of the support rod 3 arranged inside the protection body 25 itself, a preferably airtight containment chamber 32, in which the transformer 19 is housed.

Advantageously, the first and the second base wall 26, 27 of the protection body 25 are respectively provided with a first and a second through hole 33, 34 traversed by the support rod 3, and are sealingly coupled with the external surface 30 of the support rod 3 by means of respectively first and second sealing means 35, 36 interposed between the support rod 3 and respectively the first and the second base wall 26, 27 at the edge respectively of the first and second through hole 33, 34.

Preferably, in accordance with the embodiments illustrated in figures 6 and 7, the first and the second sealing means 35, 36 respectively comprise a first and a second annular gasket 35', 36' fixed to the external surface 30 of the support rod 3 respectively at the first through hole 33 of the first base wall 26 and at the second through hole 34 of the second base wall 27. In particular, the first and the second annular gasket 35' 36' are inserted respectively in a first and in a second circular groove 37, 38 obtained on the external surface 30 of the support rod 3.

Advantageously, the rotatable frame 4 is connected to the support rod 3 by means of bar bearings 39, 40, of which in particular a first bearing 39 is interposed between the first base wall 26 of the protection body 25 and a first flange 41 of the support rod 3, and a second bearing 40 is interposed between the second base wall 27 of the protection body 25 and a second flange 42 of the support rod 3.

Advantageously, the transformer 19 comprises a first core 43 fixed to the support rod 3 and provided with a first annular groove housing the first turns 22 of the primary winding 21, and a second core 44 fixed to the rotatable frame 4, spaced from the first core 43, and provided with a second annular groove arranged opposite the first annular groove of the first core 43 and housing at its interior second turns 24 of the secondary winding 23.

The first turns 22 of the primary winding 21 (and preferably the first core 43) are separated from the second turns 24 of the secondary winding 23 (and preferably from the second core 44) by means of an air interspace 45 in order to allow the relative rotation between the primary winding 21 and the secondary winding 23 of the transformer 19 itself.

Advantageously, the first and the second core 43, 44 of the transformer 19 are made of pure iron in which preferably the total percentage of the impurities is less than or equal to approximately 0.10%. This allows obtaining high efficiency in the energy transfer of the transformer 19, in particular reaching efficiency values of approximately 90%.

In operation, when the first alternating current flows into the first turns 22 of the primary winding 21 of the transformer 19, these turns generate, via magnetic induction, the aforesaid magnetic field Φ which traverses the two cores 43, 44, crossing the air interspace 45 that separates the latter. Such magnetic field Φ is linked with the second turns 24 of the secondary winding 23, generating via magnetic induction the second alternating current which flows into the second turns 24 themselves.

In accordance with a first embodiment of the present invention illustrated in figure 6, the turns 22, 24 of each winding 21, 23 of the transformer 19 are aligned with each other in succession parallel to the axis of the support rod 3. In particular, the second turns 24 of the secondary winding 23 are arranged concentrically around the first turns 22 of the primary winding 21 and are spaced from the latter turns.

In accordance with a second embodiment illustrated in figure 7, the turns 22, 24 of each winding 21, 23 of the transformer 19 are wound inside each other, lying on a plane orthogonal to the axis of the support rod 3. In particular, the second turns 24 of the secondary winding 23 face the first turns 22 of the primary winding 21 and are spaced from the latter turns.

Advantageously, the power supply means 18, which supply the first alternating current to the transformer 19, comprise at least one alternating current generator (not shown) fixed to the support structure 2 and electrically connected in output to the primary winding 21 of the transformer 19 in order to supply the first alternating current thereto at a predetermined operative frequency.

Advantageously, the current generator, obtained in particular by means of a MOSFET circuit architecture, comprises a circuit board adapted to generate the first alternating current preferably having the aforesaid operating frequency comprised between approximately 50 Hz and 1000 Hz.

Advantageously, the current generator of the power supply means 18 is connected, by means of first electric cables 46, to a source of electrical energy (not shown), such as a public or private power grid adapted to provide the generator with a 220 V and 50 Hz current. In particular, the current generator is provided with an AC/DC inverter adapted to transform the current received from the power grid into a direct current, which is transformed, by means of the aforesaid first circuit board, into the first alternating current having the predetermined operating frequency.

In accordance with a different embodiment, the current generator is power supplied with direct current, for example supplied by a current accumulator supplied by a solar panel fixed to the support structure 2 of the present apparatus 1.

In accordance with the embodiments illustrated in the enclosed figures 1 - 5, the current generator is housed inside a first sealed containment body 47, which is preferably mounted on the base plate 6 fixed on the top of the support pole 5 or it is fixed to the support rod 3. The current generator of the power supply means 18 is connected by means of the aforesaid first electric cables 46 to the electrical energy source, and by means of second electric cables 48 to the primary winding 21 of the transformer 19. The first and the second electric cables 46, 48 enter inside the first containment body 47 through corresponding passage holes in which respectively first and second cable glands 46', 48' are tightly and sealingly inserted around the corresponding cables 46, 48. Advantageously, the control means 20, which control the actuation of the illuminating device 17, comprise an electronic circuit (not shown) mounted on the rotatable frame 4 and preferably housed inside a second sealed containment body 49, which in particular is fixed on a second projecting portion 16" of the engagement body 15 of the rotatable frame 4, and is extended projecting, with respect to the support rod 3, away from the signaling body 8.

In particular, the electronic circuit of the control means 20, preferably obtained with a second circuit board, comprises an AC/DC converter module adapted to convert the second alternating current into the electrical control quantity, such as in particular a direct current which is sent to the illuminating device 17 in order to control the operation thereof.

In particular, in accordance with the embodiments illustrated in the enclosed figures 1 - 5, the electronic circuit of the control means 20 is connected by means of third electric cables 50 to the secondary winding 23 of the transformer 19, and is connected by means of fourth electric cables 51 to the illuminating device 17. The third and the fourth cables 50, 51 enter inside the second containment body 49 through corresponding second passage holes in which respectively third and fourth cable glands are tightly and sealingly inserted around the corresponding cables 50, 51.

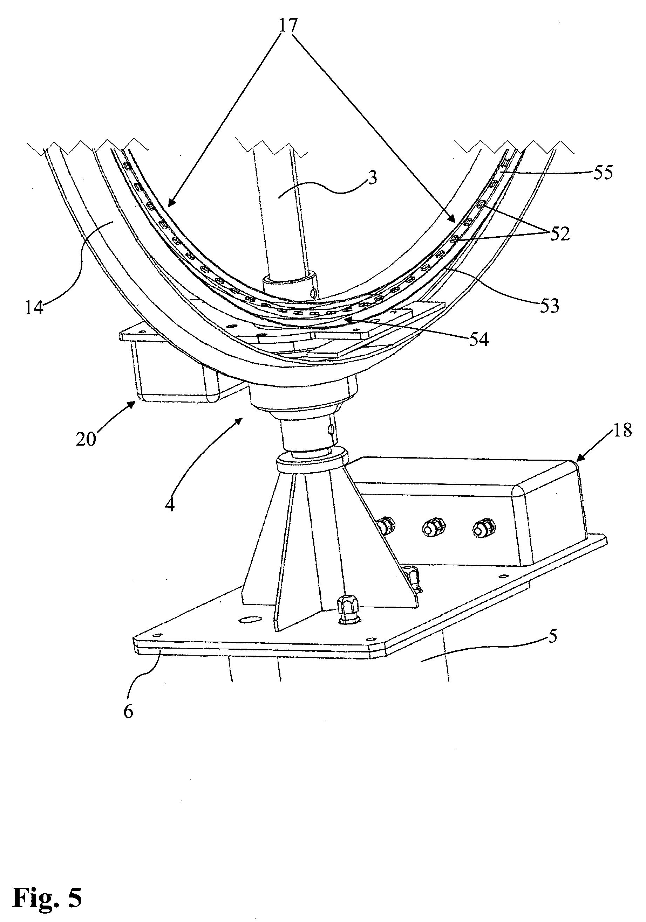

In accordance with the embodiment illustrated in figures 5 and 6, the illuminating device 17 comprises advantageously a plurality of LEDs 52 fixed along the support ring 14 of the rotatable frame 4 and each provided with its own light emission axis oriented towards the internal channel 13 of the signaling body 8.

Preferably, the illuminating device 17 comprises an annular profile 53 fixed to the rotatable frame 4 and extended along the support ring 14 of the rotatable frame 4 itself. Such annular profile 53 is provided with an annular seat 54 which houses the LEDs 52 therein and has a front opening directed towards the internal channel 13 of the signaling body 8 in order to allow the passage of the light emitted by the LEDs 52 themselves.

Advantageously, the annular profile 53 of the illuminating device 17 is fixed to the first projecting portion 16' of the engagement bodies 15 of the rotatable frame 4. In particular, each engagement body 15 is provided with an upper surface, on which the support ring 14 of the rotatable frame 4 is fixed, and with a lower surface, directed in the sense opposite the upper surface, and on which the annular profile 53 of the illuminating device 17 is fixed.

Preferably, the illuminating device 17 comprises a strip made of flexible material 55, bearing the LEDs 52 mounted, and arranged inside the annular seat 54 of the annular profile 53. In particular, the strip 55 comprises two external layers of insulating material, in particular plastic, between which electric tracks (not shown) are interposed like a sandwich which are placed to connect between the LEDs 52 and the control means 20. Advantageously, the electric tracks are provided with a plurality of pairs of terminals placed along the longitudinal edge of the strip 55 directed towards the interior of the signaling body 8. Each pair of terminals of the electric tracks is connected to the corresponding LED 52 to be supplied, which is also fixed at the aforesaid longitudinal edge of the strip 55.

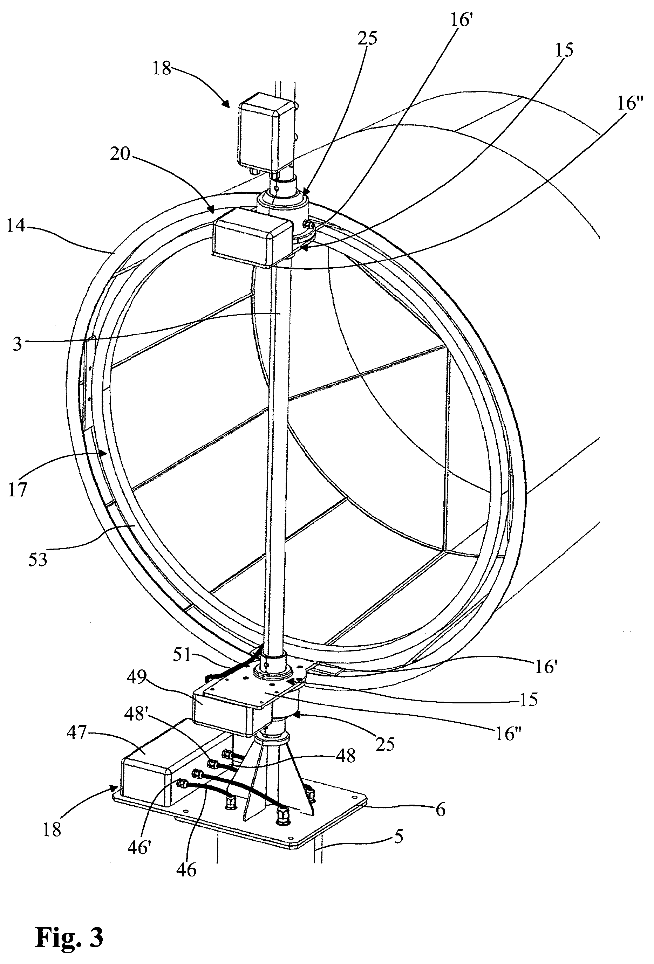

Advantageously, in accordance with the embodiment illustrated in figures 3 - 5, the annular profile 53 of the illuminating device 17 has a cross section with substantially C-shaped form, and is provided with a base wall that closes the bottom of the annular seat 54, and with two longitudinal walls, which are extended parallel to each other from the base wall and define a front edge that delimits the aforesaid front opening of the annular seat 54, and through such opening the light emitted by the LEDs 52 is susceptible of exiting from the annular seat 54 itself.

Preferably, the strip 55, which bears the LEDs 52 mounted, is fixed (inside the annular seat 54) on one of the longitudinal walls of the annular profile 53 and is provided with a support face (directed towards the other longitudinal wall) on which the LEDs 52 are mounted.

Advantageously, the LEDs 52 are of the type with lateral emission and are preferably arranged with their light emission axis positioned parallel to the support face of the strip 55.

For example, each LED 52 comprises a microchip fixed on the support face of the strip 55, a phosphor layer deposited on top of the microchip, and a titanium dioxide layer which is deposited on top of the phosphor layer and at the three sides of the microchip directed towards the interior of the annular seat 54, and is provided with a lateral window directed towards the front opening of the annular seat 54 itself and through which the LED 52 emits the light for illuminating the signaling body 8. Advantageously, the lateral-emission LEDs 52 of the illuminating device 17 of the present apparatus 1 are capable of emitting the light towards the internal channel 13 of the signaling body 8, without having to arrange reflectors for converging the light towards the signaling body 8 itself, therefore involving a structural simplification of the apparatus 1 and a consequent reduction of the production costs.

Advantageously, the present apparatus 1 comprises multiple transformers 19, each of which adapted to independently power supply, by means of corresponding control means 20, a corresponding group of LEDs 52 of the illuminating device 17.

More in detail, in accordance with the particular embodiment illustrated in the enclosed figures, the apparatus 1 comprises two transformers 19, each of which positioned at the respective engagement body 15 of the rotatable frame 4, and connected to respective control means 20.

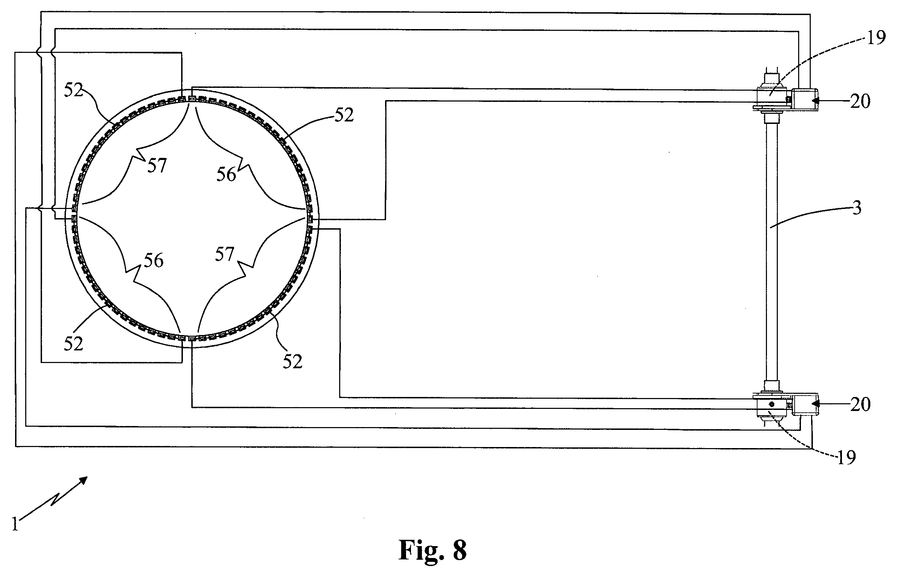

In accordance with the particular embodiment illustrated in figure 8, the illuminating device 17 comprises a first group 56 of LEDs 52 arranged along one or more first sections of the support ring 14, and a second group 57 of LEDs 52 arranged along one or more second sections of the support ring 14. Each aforesaid group 56, 57 of LEDs 52 is connected to the respective control means 20 associated with the respective transformer 19. Advantageously, the first groups 56 of LEDs 52 are arranged alternated with the second groups 57 of LEDs 52.

Of course, without departing from the protective scope of the present patent, the wind detection apparatus can also comprise more than two transformers 19 connected to corresponding control means 20 in order to actuate corresponding LED 52 groups of the illuminating device 17.

Advantageously, the arrangement of multiple transformers 19, with corresponding control means 20 for independently controlling corresponding groups 56, 57 of LEDs 52, allows the present apparatus 1 to ensure the illumination of the signaling body 8 even if one of the LED 52 groups is not supplied with power, for example due to a possible failure of the corresponding control means 20.

Advantageously, the wind detection apparatus 1 comprises a light indicator 58, preferably provided with light sources of LED type, adapted to indicate to aircraft the presence of the apparatus 1 itself.

The invention thus conceived therefore attains the pre-established objects.

## Claims

1. Wind detection apparatus (1), which comprises:
- a support structure (2) provided with at least one support rod (3);
- a rotatable frame (4) pivoted in an idle manner to said support rod (3) and susceptible of rotating around the latter;
- a signaling body (8) made of flexible material, with substantially tubular form and longitudinally extended between a first end (9) thereof and a second end (10) thereof, at said first end (9) said signaling body (8) being provided with a first edge (11) fixed to said rotatable frame (4) and defining at least one first opening, through which the wind is susceptible of entering inside said signaling body (8), acting on the latter in order to rotate said rotatable frame (4) around said support rod (3) until said signaling body (8) is aligned with the direction of the wind;
- an illuminating device (17) fixed to said rotatable frame (4) and actuatable to illuminate said signaling body (8);
- power supply means (18) mechanically associated with said support structure (2) and adapted to supply at least one first alternating current;
said apparatus (1) being **characterized in that** it also comprises:
- at least one transformer (19) electrically connected in input to said power supply means (18) in order to receive said first alternating current, and adapted to supply a second alternating current in output;
- control means (20) mounted on said rotatable frame (4), power supplied by said transformer (19) by means of said second alternating current, and electrically connected to said illuminating device (17) in order to supply an electrical control quantity thereto;
said transformer (19) comprising:
- at least one primary winding (21) fixed to said support rod (3), provided with first turns (22) wound around said support rod (3), and connected to said power supply means (18) in order to receive said first alternating current adapted to generate a magnetic field (Φ) linked with said first turns (22);
- at least one secondary winding (23) fixed to said rotatable frame (4), arranged spaced from said primary winding (21), and provided with second turns (24) positioned around said support rod (3), electrically connected to said control means (20), and said magnetic field (Φ) susceptible of being linked to such second turns (24), said magnetic field (Φ) adapted to generate said second current passing into said second turns (24) via magnetic induction.

2. Wind detection apparatus (1) according to claim 1, **characterized in that** said rotatable frame (4) comprises a protection body (25) extended around said support rod (3) and arranged to contain said transformer (19).

3. Wind detection apparatus (1) according to claim 2, **characterized in that** said support rod (3) is provided with an external surface (30) to which the primary winding (21) of said transformer (19) is fixed, and said protection body (25) is provided with an internal surface (31) to which the secondary winding (23) of said transformer (19) is fixed.

4. Wind detection apparatus (1) according to claim 3, **characterized in that** said protection body (25) is extended along the axis of said support rod (3) between a first base wall (26) and a second base wall (27) connected to each other by means of a side wall (28) extended around said support rod (3); said first and second base wall (26, 27) being respectively provided with a first and a second through hole (33, 34) traversed by said support rod (3), and being sealingly coupled with the external surface (30) of said support rod (3) by means of respectively first and second sealing means (35, 36) arranged respectively along the edge of said first and second through hole (33, 34).

5. Wind detection apparatus (1) according to any one of the preceding claims, **characterized in that** said power supply means (18) comprise at least one alternating current generator fixed to said support structure (2) and electrically connected in output to the primary winding (21) of said transformer (19) in order to supply said first alternating current thereto at a predetermined operative frequency.

6. Wind detection apparatus (1) according to any one of the preceding claims, **characterized in that** said signaling body (8) is provided with an internal channel (13) communicating with the outside by means of said first opening delimited by said first edge (11);
said rotatable frame (4) comprising at least one support ring (14) to which the first edge (11) of said signaling body (8) is fixed;
said illuminating device (17) comprising a plurality of LEDs (52) fixed along said support ring (14) and each provided with its own light emission axis oriented towards the internal channel (13) of said signaling body (8).

7. Wind detection apparatus (1) according to claim 6, **characterized in that** said illuminating device (17) comprises an annular profile (53) extended along said support ring (14) and provided with an annular seat (54) having a front opening directed towards the internal channel (13) of said signaling body (8), said LEDs (52) being housed inside such annular seat (54).

8. Wind detection apparatus (1) according to claim 7, **characterized in that** said illuminating device (17) comprises at least one strip (55) made of bendable material bearing said LEDs (52) mounted, and arranged inside the annular seat (54) of said annular profile (53).

9. Wind detection apparatus (1) according to any one of the preceding claims from 6 to 8, **characterized in that** it comprises multiple transformers (19), each of which adapted to independently power supply, by means of corresponding control means (20), a corresponding group (56, 57) of LEDs (52) of said illuminating device (17).

10. Wind detection apparatus (1) according to any one of the preceding claims, **characterized in that** said transformer (19) comprises a first core (43) fixed to said support rod (3) and provided with a first annular groove housing the first turns (22) of said primary winding (21), and a second core (44) fixed to said rotatable frame (4) and provided with a second annular groove arranged opposite said first annular groove and housing, at its interior, the second turns (24) of said secondary winding (23); said first and second core (43, 44) being made of pure iron.

## Patentansprüche

1. Winddetektionsvorrichtung (1), die Folgendes umfasst:
- eine mit mindestens einer Haltestange (3) ausgestattete Trägerstruktur (2);
- einen drehbaren Rahmen (4), der lose an der genannten Haltestange (3) verankert und geeignet ist, Letztere zu drehen;
- einen Signalisierungskörper (8) aus biegsamem Material, der im Wesentlichen rohrförmig ist und in Längsrichtung zwischen seinem ersten Ende (9) und seinem zweiten Ende (10) verläuft, wobei der genannte Signalisierungskörper auf dem genannten ersten Ende (9) mit einem ersten Rand (11) ausgestattet ist, der an dem genannten drehbaren Rahmen (4) befestigt ist und wenigstens eine erste Öffnung definiert, über die der Wind in das Innere des genannten Signalisierungskörpers (8) eintreten und auf Letzteren wirken kann, um den genannten drehbaren Rahmen (4) um die genannte Haltestange (3) herum in Drehung zu versetzen und den genannten Signalisierungskörper (8) in Windrichtung auszurichten;
- eine an dem genannten drehbaren Rahmen (4) befestigte Beleuchtungsvorrichtung (17), die betätigt werden kann, um den genannten Signalisierungskörper (8) zu beleuchten;
- mechanisch mit der genannten Trägerstruktur (2) verbundene Versorgungselemente (18), die geeignet sind, wenigstens einen ersten Wechselstrom zu liefern;
wobei der genannte Apparat (1) **dadurch gekennzeichnet ist, dass** er außerdem Folgendes umfasst:
- mindestens einen elektrisch im Eingang an die genannten Versorgungselemente (18) angeschlossenen Transformator (19), um den genannten ersten Wechselstrom zu erhalten, der geeignet ist, im Ausgang einen zweiten Wechselstrom zu liefern;
- auf dem genannten drehbaren Rahmen (4) montierte Steuervorrichtungen (20), die von den genannten Transformator (19) mittels des genannten zweiten Wechselstroms versorgt werden und elektrisch an die genannte Beleuchtungsvorrichtung (17) angeschlossen sind, um Letzterer mit einer elektrischen Steuergröße zu versorgen;
wobei der genannte Transformator (19) Folgendes umfasst:
- wenigstens eine an der genannten Haltestange (3) befestigte Primärwicklung (21), die mit ersten, um die genannte Haltestange (3) gewickelten Windungen (22) versehen ist, die an die genannten Versorgungselemente (18) angeschlossen sind, um den genannten ersten Wechselstrom zu erhalten, der geeignet ist, ein Magnetfeld (Φ) zu erzeugen, das mit den genannten ersten Windungen (22) verbunden ist;
- wenigstens eine an dem genannten drehbaren Rahmen (4) befestigte Sekundärwicklung (23), die im Abstand zu der genannten Primärwicklung (21) angeordnet und mit zweiten Windungen (24) versehen ist, die um die genannte Haltestange (3) positioniert und elektrisch an die genannten Steuervorrichtungen (20) angeschlossen sind, wobei sich mit diesen zweiten Windungen (24) das genannte Magnetfeld (Φ) verbinden kann, das geeignet ist, durch magnetische Induktion den genannten zweiten Strom zu erzeugen, der in den genannten zweiten Windungen (24) fließt.

2. Winddetektionsvorrichtung (1) nach Anspruch 1, **dadurch gekennzeichnet, dass** der genannte drehbare Rahmen (4) einen Schutzkörper (25) umfasst, der um die genannte Haltestange (3) verläuft und dem Einschließen des genannten Transformators (19) dient.

3. Winddetektionsvorrichtung (1) nach Anspruch 2, **dadurch gekennzeichnet, dass** die genannte Haltestange (3) mit einer Außenfläche (30) ausgestattet ist, an der die Primärwicklung (21) des genannten Transformators (19) befestigt und der genannte Schutzkörper (25) mit einer Innenfläche (31) versehen ist, an der die Sekundärwicklung (23) des genannten Transformators (19) befestigt ist.

4. Winddetektionsvorrichtung (1) nach Anspruch 3, **dadurch gekennzeichnet, dass** der genannte Schutzkörper (25) der Achse der genannten Haltestange (3) entlang zwischen einer ersten Basiswand (26) und einer zweiten Basiswand (27) verläuft, die miteinander durch eine Seitenwand (28) verbunden sind, die um die genannte Haltestange (3) verläuft; wobei die genannte erste und zweite Basiswand (26, 27) jeweils mit einer ersten und einer zweiten durchgehenden Öffnung (33, 34) versehen sind, die von der genannten Haltestange (3) überquert werden, und dicht abschließend mit der Außenfläche (30) der genannten Haltestange (3) durch jeweils erste und zweite Dichtungsvorrichtungen (35, 36) verbunden sind, die jeweils entlang des Rands der genannten ersten und zweiten durchgehenden Öffnung (33, 34) angeordnet sind.

5. Winddetektionsvorrichtung (1) nach einem beliebigen der vorangegangenen Ansprüche, **dadurch gekennzeichnet, dass** die genannten Versorgungselemente (18) mindestens einen an der genannten Trägerstruktur (2) angebrachten Wechselstromgenerator umfassen, der im Ausgang elektrisch an die Primärwicklung (21) des genannten Transformators (19) angeschlossen ist, um Letzterem den genannten ersten Wechselstrom bei einer zuvor festgelegten Arbeitsfrequenz zu liefern.

6. Winddetektionsvorrichtung (1) nach einem beliebigen der vorangegangenen Ansprüche, **dadurch gekennzeichnet, dass** der genannte Signalisierungskörper (8) mit einem internen Kanal (13) ausgestattet ist, der mit der Außenumgebung über eine erste, von dem genannten ersten Rand (11) begrenzte Öffnung kommuniziert;
wobei der genannte drehbare Rahmen (4) einen Stützring (14) umfasst, an dem der erste Rand (11) des genannten Signalisierungskörpers (8) befestigt ist;
wobei die genannte Beleuchtungsvorrichtung (17) eine Vielzahl von entlang des genannten Stützrings (14) angebrachter LEDs (52), von denen jede mit einer eigenen, zum internen Kanal (13) des genannten Signalisierungskörpers (8) ausgerichteten Lichtemissionsachse ausgestattet ist, umfasst.

7. Winddetektionsvorrichtung (1) nach Anspruch 6, **dadurch gekennzeichnet, dass** die genannte Beleuchtungsvorrichtung (17) ein entlang des genannten Stützrings (14) verlaufendes Ringprofil (53) umfasst, das mit einem ringförmigen Sitz (54) mit einer frontalen, zum internen Kanal (13) des genannten Signalisierungskörpers (8) gerichteten Öffnung ausgestattet ist, in dessen Inneren die genannten LEDs (52) untergebracht sind.

8. Winddetektionsvorrichtung (1) nach Anspruch 7, **dadurch gekennzeichnet, dass** die genannte Beleuchtungsvorrichtung (17) wenigstens ein Band (55) aus biegsamem Material umfasst, auf dem die genannten LEDs (52) montiert sind, das im Inneren des ringförmigen Sitzes (54) des genannten Ringprofils (53) angeordnet ist.

9. Winddetektionsvorrichtung (1) nach einem beliebigen der vorangegangenen Ansprüche 6 bis 8, **dadurch gekennzeichnet, dass** sie mehrere Transformatoren (19) umfasst, von denen jeder geeignet ist, anhand von entsprechenden Steuervorrichtungen (20) eine entsprechende Gruppe (56, 57) der LEDs (52) der genannten Beleuchtungsvorrichtung (17) unabhängig zu versorgen.

10. Winddetektionsvorrichtung (1) nach einem beliebigen der vorangegangenen Ansprüche, **dadurch gekennzeichnet, dass** der genannte Transformator (19) einen ersten, an der genannten Haltestange (3) befestigten Kern (43), der mit einer ersten ringförmigen Nut versehen ist, in der die ersten Windungen (22) der genannten Primärwicklung (21) untergebracht sind, und einen zweiten an dem genannten drehbaren Rahmen (4) befestigten Kern (44) mit einer zweiten ringförmigen, vor der genannten ersten ringförmigen Nut angeordneten Nut umfasst, in der die zweiten Windungen (24) der genannten Sekundärwicklung (23) untergebracht sind; wobei der genannte erste und zweite Kern (43, 44) aus reinem Eisen hergestellt sind.

## Revendications

1. Appareil de détection de vent (1) comprenant :
- une structure de support (2) munie d'au moins une tige de soutien (3) ;
- un châssis pivotant (4) monté de manière libre sur ladite tige de soutien (3) et susceptible de tourner autour de cette dernière ;
- un corps de signalisation (8) en matériau souple, de forme essentiellement tubulaire et se développant longitudinalement entre une première extrémité (9) et une seconde extrémité (10), au niveau de ladite première extrémité (9) ledit corps de signalisation (8) étant muni d'un premier bord (11) fixé audit châssis pivotant (4) et définissant au moins une première ouverture, à travers laquelle le vent est susceptible d'entrer à l'intérieur dudit corps de signalisation (8) en agissant sur ce dernier pour mettre en rotation ledit châssis pivotant (4) autour de ladite tige de soutien (3) jusqu'à aligner ledit corps de signalisation (8) sur la direction de vent ;
- un dispositif d'éclairage (17) fixé audit châssis pivotant (4) et actionnable pour éclairer ledit corps de signalisation (8) ;
- des moyens d'alimentation (18) associés mécaniquement à ladite structure de support (2) et destinés à fournir au moins un premier courant alternatif ;
ledit appareil (1) étant **caractérisé en ce qu'**il comprend, par ailleurs :
- au moins un transformateur (19) électriquement branché en entrée auxdits moyens d'alimentation (18) pour recevoir ledit premier courant alternatif, et destiné à fournir en sortie un second courant alternatif ;
- des moyens de contrôle (20) montés sur ledit châssis pivotant (4), alimentés par ledit transformateur (19) au moyen dudit second courant alternatif, et électriquement branchés audit dispositif d'éclairage (17) pour fournir à ce dernier une grandeur électrique de contrôle ;
ledit transformateur (19) comprenant :
- au moins un enroulement primaire (21) fixé à ladite tige de soutien (3), muni de premières spires (22) enroulées autour de ladite tige de soutien (3), et branchées auxdits moyens d'alimentation (18) pour recevoir ledit premier courant alternatif destiné à générer un champ magnétique (Φ) chaîné auxdites premières spires (22) ;
- au moins un enroulement secondaire (23) fixé audit châssis pivotant (4), disposé à distance dudit enroulement primaire (21), et muni de secondes spires (24) positionnées autour de ladite tige de soutien (3), électriquement branchées auxdits moyens de contrôle (20), et aux secondes spires (24) duquel est susceptible de se chaîner ledit champ magnétique (Φ) destiné à générer par induction magnétique ledit second courant passant dans lesdites secondes spires (24).

2. Appareil de détection de vent (1) selon la revendication 1, **caractérisé en ce que** ledit châssis pivotant (4) comprend un corps de protection (25) qui s'étend autour de ladite tige de soutien (3) et situé de manière à contenir ledit transformateur (19).

3. Appareil de détection de vent (1) selon la revendication 2, **caractérisé en ce que** ladite tige de soutien (3) est munie d'une surface extérieure (30) à laquelle est fixé l'enroulement primaire (21) dudit transformateur (19), et ledit corps de protection (25) est équipé d'une surface intérieure (31) à laquelle est fixé l'enroulement secondaire (23) dudit transformateur (19).

4. Appareil de détection de vent (1) selon la revendication 3, **caractérisé en ce que** ledit corps de protection (25) se développe selon l'axe de ladite tige de soutien (3) entre la première paroi de base (26) et une seconde paroi de base (27) reliées l'une à l'autre par une paroi latérale (28) qui se développe autour de ladite tige de soutien (3) ; lesdites première et seconde parois de base (26, 27) munies respectivement d'un premier et d'un second trou passant (33, 34), tous deux traversés par ladite tige de soutien (3), et étant couplés de manière étanche avec la surface extérieure (30) de ladite tige de soutien (3) à travers respectivement les premiers et les seconds moyens d'étanchéité (35, 36) disposés respectivement le long du bord desdits premier et second trous passants (33, 34).

5. Appareil de détection de vent (1) selon l'une des revendications précédentes, **caractérisé en ce que** lesdits moyens d'alimentation (18) comprennent au moins un générateur de courant alternatif fixé à ladite structure de support (2) et électriquement branché en sortie à l'enroulement primaire (21) dudit transformateur (19) pour fournir à ce dernier ledit premier courant alternatif à une fréquence opérationnelle prédéterminée.

6. Appareil de détection de vent (1) selon l'une des revendications précédentes, **caractérisé en ce que** ledit corps de signalisation (8) est muni d'un canal intérieur (13) communiquant avec l'extérieur au moyen de ladite première ouverture délimitée par ledit premier bord (11) ;
ledit châssis pivotant (4) comprenant au moins un anneau de support (14) auquel est fixé le premier bord (11) dudit corps de signalisation (8) ;
ledit dispositif d'éclairage (17) comprenant une pluralité de LED (52) fixées le long dudit anneau de support (14), chacune étant munie de son propre axe d'émission de la lumière orienté vers le canal intérieur (13) dudit corps de signalisation (8).

7. Appareil de détection de vent (1) selon la revendication 6, **caractérisé en ce que** ledit dispositif d'éclairage (17) comprend un profil annulaire (53) se développant le long dudit anneau de support (14) et muni d'une base annulaire (54) ayant une ouverture frontale tournée vers le canal intérieur (13) dudit corps de signalisation (8), et à l'intérieur de ladite base annulaire (54) sont logées lesdites LED (52).

8. Appareil de détection de vent (1) selon la revendication 7, **caractérisé en ce que** ledit dispositif d'éclairage (17) comprend au moins un ruban (55) en matériau souple sur lequel sont montées lesdites LED (52) et disposé à l'intérieur du logement annulaire (54) dudit profil annulaire (53).

9. Appareil de détection de vent (1) selon l'une des revendications précédentes de 6 à 8, **caractérisé en ce qu'**il comprend plusieurs transformateurs (19), chacun desquels est destiné à alimenter de manière indépendante, par le biais des moyens de contrôle (20) correspondants, un groupe (56, 57) correspondant des LED (52) dudit dispositif d'éclairage (17).

10. Appareil de détection de vent (1) selon l'une des revendications précédentes, **caractérisé en ce que** ledit transformateur (19) comprend un premier noyau (43) fixé à ladite tige de soutien (3) et muni d'une première rainure annulaire logeant les premières spires (22) dudit enroulement primaire (21), et un second noyau (44) fixé audit châssis pivotant (4) et muni d'une seconde rainure annulaire disposée en face de ladite première rainure annulaire et logeant à l'intérieur les secondes spires (24) dudit enroulement secondaire (23) ; lesdits premier et second noyaux (43, 44) étant réalisés en fer pur.
